# EUROPEAN PATENT SPECIFICATION

(11) **EP 3 017 682 B1**
(45) Date of publication and mention of the grant of the patent: **06.03.2019**
(21) Application number: 15173627.9
(22) Date of filing: 24.06.2015
(51) Int. Cl.: A01D 41/12, A01F 12/40

(54) **DRIVE SYSTEM FOR THE STRAW CHOPPER OF A COMBINE HARVESTER**
ANTRIEBSSYSTEM FÜR EINEN STROHHÄCKSLER EINES MÄHDRESCHERS
SYSTÈME D'ENTRAÎNEMENT POUR DÉCOUPEUR DE PAILLE D'UNE MOISSONNEUSE-BATTEUSE

(30) Priority: 14.08.2014 US 201462037221 P
(43) Date of publication of application: 11.05.2016
(73) Proprietor: Mayerle, Dean, Saskatoon, Saskatchewan S7K 3J7 (CA)
(72) Inventor: Mayerle, Dean, Saskatoon, Saskatchewan S7K 3J7 (CA)
(74) Representative: Franke, Dirk

(56) References cited:
- EP-A1- 1 905 291
- EP-A1- 2 839 729
- BE-A- 519 789
- US-A- 2 683 378
- US-A1- 2014 148 286

## Description

This invention relates to a drive system for the straw chopper of a combine harvester.

### BACKGROUND OF THE INVENTION

In US Patent 6840854 issued Jan 11 2005 of Redekop is disclosed an apparatus for chopping and discharging straw from a combine harvester of the type which includes a plurality of blade members mounted on a hub for rotation about an axis of the hub with the blade members being arranged at spaced positions along the length of the hub substantially in radial planes of the hub so as to pass adjacent a plurality of axially spaced stationary blades again arranged in radial planes of the hub. The straw and other material discharged from the combine is fed into one side of the housing of the apparatus onto the hub and the material is carried around by the hub past the stationary blades in a chopping action. The material is then discharged from a discharge opening in the housing onto a tail board with spreading fins for spreading across the field.

Many different designs of combine harvester have been proposed and many are available on the market at this time. One typical example of a combine harvester and its drive system is shown in US Patent 8,781,694 (Sheidler) assigned to Deere and issued July 15 2014. This provides a drive system with an output drive shaft carrying a drive pulley for driving a straw chopper such as that shown in the above patent of Redekop. The Belgian patent BE 519789 A1 relates to a device for grinding straw from a combine harvester.

Combine developments in recent years have put greater demands on the straw choppers and chaff spreaders. The main reasons are:
Larger combines and larger cutting widths are creating higher flows of straw and chaff;
Wider cutting widths create more demanding spreading widths;
Reduced tilling practices have put more demand on even spreading of both straw and chaff;
Plant breeding has resulted in tougher straw, higher yields and more residue;
Grain is often ready for harvest while the straw remains green.

The patent application US 2014/0148286 A1 discloses a combine harvester with an internal chopping rotor which can be driven at two set speeds.

The European patent application EP 2 839 729 A1 relates to a combine harvester with chopping and spreading system at the rear discharge where the spreading action on the straw chopped by the chopping rotor is carried out by two rotating spinner disks. The speed of the rotor can be changed between two set speeds for use on different crop types.

### SUMMARY OF THE INVENTION

According to the invention there is provided a chopper and spreading assembly for a combine harvester according to claim 1.

Preferably the output drive shaft of the coupling arrangement is arranged in a direction generally longitudinally of the drive shaft and there is provided a single drive shaft extending from the output drive shaft of the coupling arrangement to the gear box. However the drive may include more than one drive shaft where the drive shafts are connected end to end. In addition the drive may include additional gear boxes in a drive chain, which includes the drive shaft, from the first gear box to the second gear box.

Preferably each of the coupling arrangement and the gear box is a right angle gear box so that the drive shaft extends at right angles to the axis of the rotor.

Thus in some embodiments, the drive of the combine harvester may include a stub shaft out of the standard driving gearbox extending along the direction of the drive shaft so that there is required only a single gear box at the rotor. Alternately in another arrangement including a first gear box at the drive output and a second gear box at the rotor there may also be provided a third gear box in the drive train..

Preferably each of the first and second gear box is right angle gear box so that the drive shaft extends at right angles to the axis of the rotor.

Preferably the gear boxes are mounted on a support wall of the combine harvester with the drive shaft extending along the outside of the support wall. This may be the exterior wall so that the shaft runs outside the exterior wall.

According to the invention there is provided an adjustment to remotely adjust the rotational speed of the straw chopper rotor. This is preferably operated from the cab depending on operating conditions.

The speed is remotely adjustable with a continuously variable transmission in the combine drive system which can be provided at the selected drive shaft. However the CVT can be located at other points in the system.

In another arrangement the speed can be adjusted by an actuator on one of the first and second gearboxes and may be a multi-speed system as opposed to a CVT.

Preferably the transmission to the chopper rotor can be disengaged at a suitable location in the system for example at one of the first and second gearboxes.

Preferably the drive shaft is supported by a gearbox shaft of one or both of the first and second gearboxes and is preferably supported by both.

Preferably the drive shaft is telescoping to allow for the chopper housing to slide in and out of operating position without disconnection of the driveline.

In one arrangement, one end of the chopping rotor can be supported by a shaft of the second gearbox for example where the second gearbox is supported on a side wall of the housing and provides a splined output shaft which extends through the side wall into a cooperating splined female receptacle of the rotor. In most cases the other end of the rotor is supported on a bearing at the other side of the housing.

However more preferably, the chopping rotor is supported by self-aligning bearings on the chopper housing.

Preferably the second gearbox is supported on a side wall of the housing and provides an adjustment method to align the shaft of the gearbox with the chopping rotor shaft.

Preferably a resilient coupler connects the shaft of the second gearbox with the chopping rotor shaft to allow misalignment due to imperfect assembly and torquing of the system as the chopper is loaded.

Preferably the housing is of the type containing stationary blades between which the chopper blades pass.

Preferably the chopper and spreading assembly is of the type which includes a tailboard with guide fins for spreading the material from the rotor although a rotatory powered spreader can also be used.

Preferably the first and second gear boxes, the drive shaft and the chopper and spreading assembly are provided as a kit of parts for mounting on the selected output shaft of the combine harvester.

In another arrangement, the first gear box can be formed as part of the drive system of the combine harvester.

Preferably there is provided a resilient coupler between the second gearbox and the rotor to take the flexing of the drive as torque is applied.

Preferably the drive transmission includes a cogged timing belt capable of carrying greater than 200 HP. Preferably this is used as part of the variable speed drive or continuously variable transmission in the combine drive system where the use of a cogged timing belt acts to provide a positive drive engagement when varying the speed of the drive quickly.

The arrangement as described herein may solve one or more of the following problems with existing technology:
Combines are being designed with significantly more power and threshing capacity. They are getting very complex with a number of different options available. Designers are running out of room for the drive due to these options and the maximum available transport sizes. The conventional straw chopper drive takes up a lot of room which is solved by the present invention.

Power requirements for straw choppers are approaching 300 HP and the present arrangement can provide a heavier, stronger drive.

Combine drives are typically setup for only 2 speeds, high speed for cutting small grains (2500 - 3400 rpm) and low speed for corn and sunflowers, due to damage by heavy large corn cobs and sunflowers (800-1500rpm). The present arrangement can provide greater speed variability.

Combine operators desire to maintain size of residue cutting regardless of field conditions. If conditions are tough due to green straw or higher moisture the present arrangement allows the chopper to rotate faster to provide the same level of cutting. Often conditions change rapidly from morning, to afternoon, to night and it is desirable to vary the speed from the operator's seat.

The present arrangement can provide the following:
a simple and cost effect method of mounting and driving a straw chopping rotor;
a simple method for disengaging a straw chopper while the threshing system is able to operate;
a method to for more than one high speed operating speed;
a method to remotely vary the chopper speed by the operator to match conditions in the field.

### BRIEF DESCRIPTION OF THE DRAWINGS

One embodiment of the invention will now be described in conjunction with the accompanying drawings in which:
Figure 1 is a schematic side elevational view of a typical exemplary prior art combine harvester including the drive system to the combine components including the straw chopper.
Figure 2 is a schematic layout of the drive system of the prior art combine harvester of Figure 1.
Figure 3 is an isometric view of some components of the combine harvester of Figure 1 showing the drive system according to the present invention.
Figure 4 is a side elevational view of the components of Figure 3.
Figure 5 is a top plan view of the components of Figure 3.
Figure 6 is a top plan view of the components of Figure 5 on an enlarged scale.
Figure 7 is an isometric view of the components of Figure 5 on an enlarged scale.
Figure 8 is an isometric view of the first gear box and an alternative arrangement of the variable speed drive of Figure 5 on an enlarged scale.

In the drawings like characters of reference indicate corresponding parts in the different figures.

### DETAILED DESCRIPTION

A harvesting vehicle 100 includes a combine harvester 102 and a harvesting head 104. Harvesting head 104 is supported on the front of the combine harvester 102, resting upon and supported by a feederhouse 106 that is pivotally coupled to the front end of the combine harvester 102.

Crop material severed by the harvesting head 104 is conveyed rearward through an inclined conveyor in the feederhouse 106 into the body of the combine harvester 102. Once inside the body of the combine harvester 102, the crop material is directed into a gap between a threshing rotor 108 and a concave 110. The concave 110 partially surrounds the threshing rotor. The threshing rotor 108 has threshing elements (not shown) that engage the crop material that is drawn between the threshing elements and the concave 110, and separate the grain from the remaining material.

The grain falls downward through apertures in the concave 110 into a cleaning shoe 112. A cleaning fan 114 is provided to blow air upward through screens in the cleaning shoe 112. This flow of air separates the grain from lighter remaining material. The grain is permitted to fall downward through screens in the cleaning shoe 112 and onto the floor of the combine harvester 102.

The lighter remaining material is carried rearward, where it is ejected from the combine harvester 102 and is spread over the ground.

The grain is carried upward by a transverse auger 116 and deposited in a grain tank 118. Periodically, a grain cart or truck pulls alongside the combine and an unloading conveyor 120 (in this case, an auger disposed inside a tube) conveys the grain from the grain tank 118 into the grain cart or truck. The remaining material that is separated from the grain by the interaction of the threshing rotor 108 and the concave 110 is carried to the rear of the threshing rotor 108 and concave 110 and is conveyed to a chopper 124. The chopper 124 chops the remaining material into smaller particles and distributes them over the ground.

An engine 126 is disposed in an upper rear portion of the combine harvester 102 in a position adjacent to the rear end of the threshing rotor 108. The engine 126 is coupled to and drives a gearbox 128, which in turn is coupled to and drives the threshing rotor 108, causing the threshing rotor 108 to rotate within the concave 110. The gearbox 128 includes a first drive member 130 and the second drive member 132 that are respectively coupled to and drive the chopper 124 and the unloading conveyor 120.

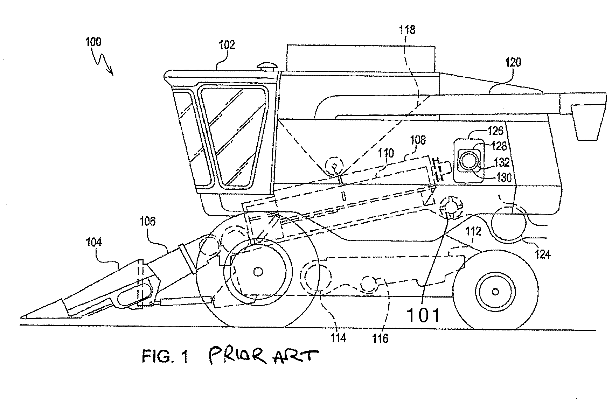

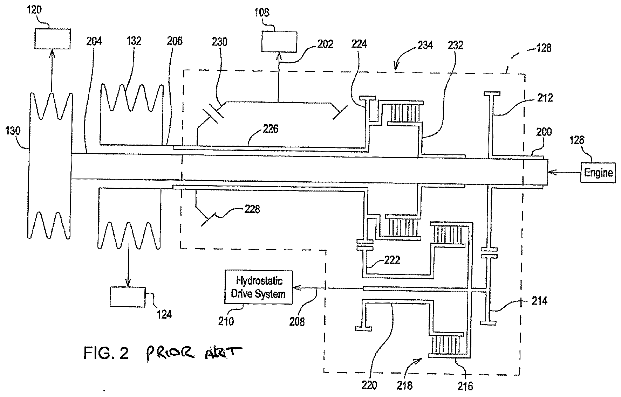

Referring now to FIG. 2, engine 126 is coupled to an input shaft 200 extending from gearbox 128. The threshing rotor 108 is coupled to and driven by an output shaft 202 which extends from the gearbox 128. A first output shaft 204 and a second output shaft 206 both extend from gearbox 128. The first output shaft 204 is coupled to and drives the first drive member 130. The second drive member 132 is coupled by a belt (not shown) to the unloading conveyor 120 and drives the unloading conveyor 120. The second output shaft 206 is coupled to and drives the second drive member 132. The second drive member 132 is coupled by a belt (not shown) to the chopper 124 and drives the chopper 124. An output shaft 208 extends from the gearbox 128 and is coupled to a hydrostatic drive system 210, which in turn is coupled to the drive wheels (the two front wheels in FIG. 1) of the combine harvester 102.

A gear 212 is fixed to the input shaft 200. The gear 212 is engaged to and drives a gear 214. The gear 214 is fixed to and drives the input shaft 216 of a hydraulic clutch 218. The hydraulic clutch 218 has an output shaft 220 that is coupled to and drives a gear 222. The gear 222 drives the gear 224. The gear 224 is fixed to and drives a shaft 226.

The shaft 226 is fixed to and drives a gear 228. The gear 228 is engaged with and drives a gear 230. The gear 230 is fixed to and drives the output shaft 202. The shaft 226 is also fixed to and drives the second output shaft 206.

The input shaft 200 is also fixed to and drives an input member 232 of a hydraulic clutch 234. The hydraulic clutch 234 has an output member 236 that is coupled to and drives the gear 224.

A conventional internal chopper or beater 100 is also provided in the combine behind the rotor 108 and directs material to the external chopper 124.

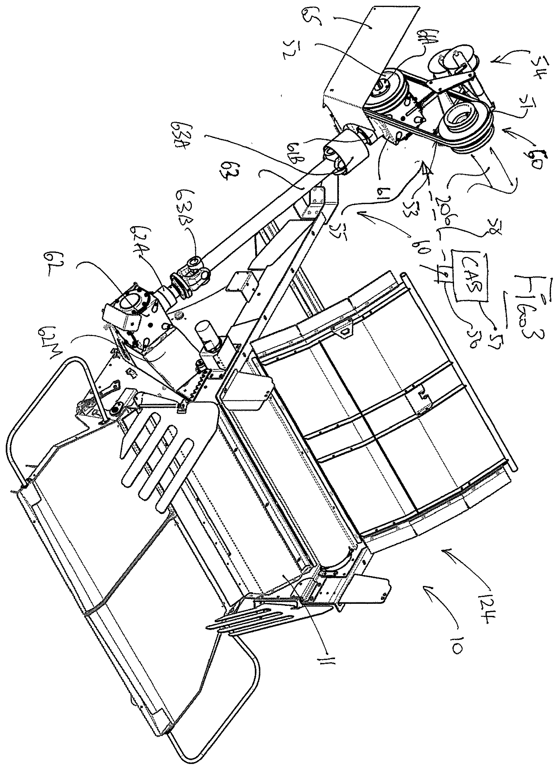

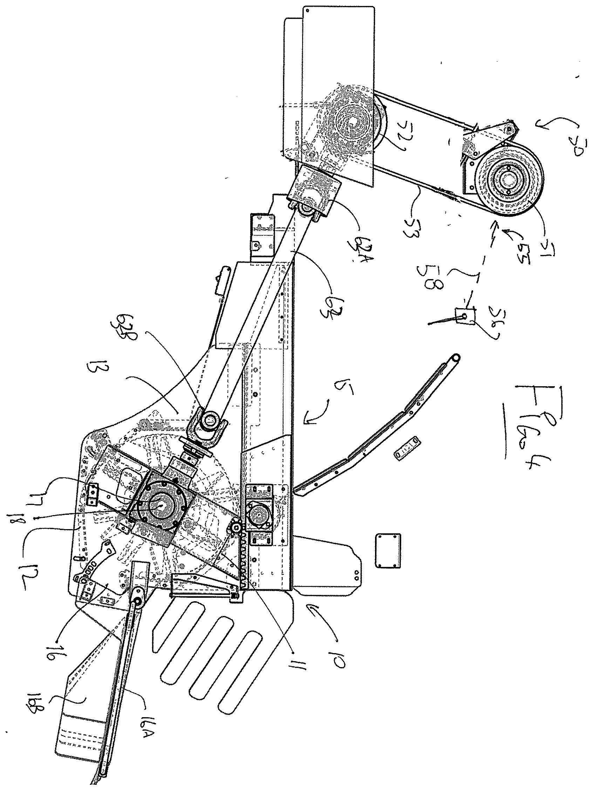

The chopper and discharge arrangement 124 shown in Figures 3 to 7 is very similar to that from the prior patents of Redekop which are patents number US 5 232 405 and US 5 482 508.

The apparatus which is basically as shown in US Patent 6840854 issued Jan 11 2005 of Redekop therefore comprises a housing 10 defined by a top wall 11, a bottom wall 12 and two end walls 13. The end walls 13 include attachment means schematically for attachment of the housing to the outlet of a combine harvester for discharge of straw and possibly chaff from the combine harvester into an inlet opening 15 of the housing 10. The bottom wall 12 defines a semi-cylindrical portion extending from the inlet 15 to an outlet 16 through which chopped straw and air is discharged at relatively high velocity for spreading across the field or for transportation into a container.

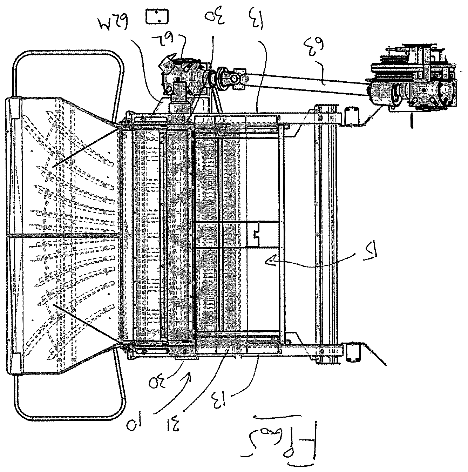

Within the housing is mounted a hub 17 which is carried on suitable bearings 30 (Figure 5) for rotation about a hub axis 18 at a center of the housing so that blade members 19 carried by the hub sweep around within the housing to entrap straw fed through the inlet 15 and to carry the straw and air past stationary blades 20 for chopping and for discharge through the outlet 16. The stationary blades 20 are mounted on the housing at a position approximately midway between the inlet 15 and the outlet 16 so that the blade members 19 sweep between the stationary blades in a cutting action.

The hub 17 carries a plurality of lugs 21 at angularly and axially spaced positions therealong with each lug mounting a pair of blade members for pivotal movement of the blade members 19 about a pin 22 parallel to the axis 18. Each of the lugs carries a pair of blade members. Each lug is aligned with a respective one of the stationary blades 20 so that each stationary blade has associated with it a respective one of the lugs and thus has associated with it the pair of blades carried by that lug. Each stationary blade is thus swept by the blade members once for each rotation of the hub with some of the stationary blades being swept at each of the eight positions of rotation of the hub.

In this arrangement of the chopper, there is provided three sections of the chopper assembly including a first fan section 30 at one end of the hub 17 and the second fan section 31 at the other end of the hub 17. In-between the two narrow fan sections is defined a center section which provides the whole of the cutting action.

Within the center section all of the blades 19 are formed of with a cutting edge lying in a radial plane of the axis 18. The blades are preferably of the conventional flat blade type with a leading and trailing chamfered edge. Thus each of the two cutting blades in the center section can pass closely on either side of a respective one of the stationary blades 20. Thus the stationary blades can be spaced by a distance which is just sufficient to allow the passage there between of the preferably flat cutting blade. In the preferred arrangement, the spacing between the stationary blades is thus small in that the stationary blades are not sufficiently spaced to allow the passage there between of a fan type blade.

In the fan sections 30 and 31, there is provided a ring 33 which is mounted on the hub 17 at a respective end of the hub. The ring thus surrounds the cylindrical wall of the hub and stands outwardly therefrom just beyond the end of the center section defined by the stationary blades and the blades 19 carried on the hub.

The rings 33 each carry a plurality of fan blades 34 at spaced positions around the ring. The fan blades 34 are arranged thus so that each follow directly behind the next at the same axial location and there is no staggering of the fan blades 34. There are six such fan blades so that the spacing between them angularly of the hub may be different relative to the spacing of the stationary blades.

Each of the fan blades 34 is bent with a fan blade portion 34A so that each of the fan blades is of the shape shown in Figure 3 of the US patent 5,482,508 of Redekop. However the fan blades 34 do not necessarily have a sharp and leading edge since there is intended to be no cutting action in the fan section. Thus the fan blades are spaced from the end most stationary blade so that in effect no cutting action occurs in this section.

The bent fan blade portion stands outwardly to one side of the flat plate portion of the fan blade. The fan blade portion which is bent at right angles to the main body of the fan blade is maximised in dimension so that it may be rectangular. This large blade area together with the presence of the six blades provides a total fan blade area of 36 square inches which generates a significant air flow.

There is no baffle or other elements within the housing or on the chopper assembly to prevent air flow or material flow axially between the center section and the fan sections. The mounting ring 33 is only slightly greater in dimension than the hub so that it does not significantly interfere with the air flow between the hub and the housing since the majority of the air flow is around the outside of the housing where the fan blades are at their most effective.

The fan blade portion 34A is inclined forwardly and outwardly so that at a regularly outer position toward the outer end of each fan blade the fan blade portion is angularly advanced relative to its position closer to the axis of the hub. This incline outwardly and forwardly significantly increases the air flow effect driving the air in the greater volume and at higher speed radially from the fan section and outwardly of the exit 16.

Preferably the fan section comprises only a single row of the six fan blades but in some cases an additional row or rows may be provided although this is not preferred. The fan blades are arranged immediately adjacent the end walls 13 so that they take up minimum space at the end of the chopper assembly. It will be appreciated that the intention is to provide maximum air flow in the fan sections while taking up minimum dimensions so that the maximised chopping effect to provide shortest material is achieved within the center section using the flat blades.

Just at the fan section, the housing provides a cover wall which is a semi-cylindrical narrow wall having an inner edge at the intersection between the center section and the fan section and an outer edge abutting or attached to the outer wall 13. This cover panel thus reduces the amount of feed material which enters the fan section although of course this is not precluded in view of the fact that the material can flow axially from a position at the flat blades into the fan section due to the tendency for the fan section to draw air axially outwardly at the inlet and to drive air axially inwardly at the outlet.

In operation it has been found that the very high velocity of air from the fan section exiting radially outwardly from the exit discharge 16 occurs not only at the fan section but also extends partly into the width of the center section so that approximately 30 to 38 cm of the center section has a velocity at the exit which can be greater than 22,8 m/s.

The above arrangement of chopper is one example only of arrangements which can be used herein.

The combine harvester thus includes a crop inlet system 104, 106, the threshing system 108, 110 for separating the crop into grain and discharge material and the rear discharge 101 behind the beater/ chopper 103 for expelling the discharge material from the combine harvester.

The chopper and spreading assembly 124 is arranged to be mounted at the rear discharge 101 and includes the housing 11, the rotor 17 mounted in the housing 11 for rotation around a generally horizontal axis and carrying the plurality of chopper blades 19 for chopping the discharge material.

At the exit 16 is provided the material spreading assembly in the form of a tailboard 16A with guide fins 168 for receiving the chopped material and spreading the material to the rear and sides of the combine harvester.

The combine drive system shown in Figure 2 includes the drive motor 126 and a plurality of output drive shafts 200, 206.

As shown in Figures 3 to 7, the a drive transmission 60 is arranged for connection to the selected one 206 of the output drive shafts of the drive system for communicating drive from the selected drive shaft 206 to the rotor 17. The drive transmission includes a first gear box 61 having an input 61A connected to the drive shaft 206 by a variable speed drive 50.

The variable speed drive 50 includes pulleys 51 and 52 connected by a belt 53 where the driving ratios in the gearbox can be varied to change the input speed. The variable speed drive includes a shifter system operated by a linkage 55 controlled by a remote cable system 58 communicating with a manually operable lever 56 in the cab 57.

That is the driver pulley 51 of the variable speed drive is connected to a selected one of the output shafts of the combine's gearbox that would be best suited for the variable drive arrangement. Alternately any one of the gearboxes 61 and 62 would be capable of being fitted with a planetary gear set to accomplish this.

Gearbox 52 pivots on the mounting assembly to tension belt 53. A turn buckle can be provided to adjust the pulley 52 on gearbox 61 to be aligned in the same plane as pulley 51.

The gear box 61 is a right angle gear box having the input shaft 61A thereof at right angles to an output shaft 61B so that the output is driven by the input about its respective axis at speed directly proportional to the input.

The drive transmission further includes a second gear box 62 having an input shaft 62A and an output shaft 62B connected to the rotor 17. Again, the gear box 62 is a right angle gear box having the input shaft 62A thereof at right angles to the output shaft 62B so that the output is driven by the input about its respective axis at speed directly proportional to the input.

A resilient coupler 62C is provided between the second gearbox 62 at the output shaft 62B and the chopper rotor at the shaft 62D of the rotor to take the flexing of the drive as torque is applied or removed.

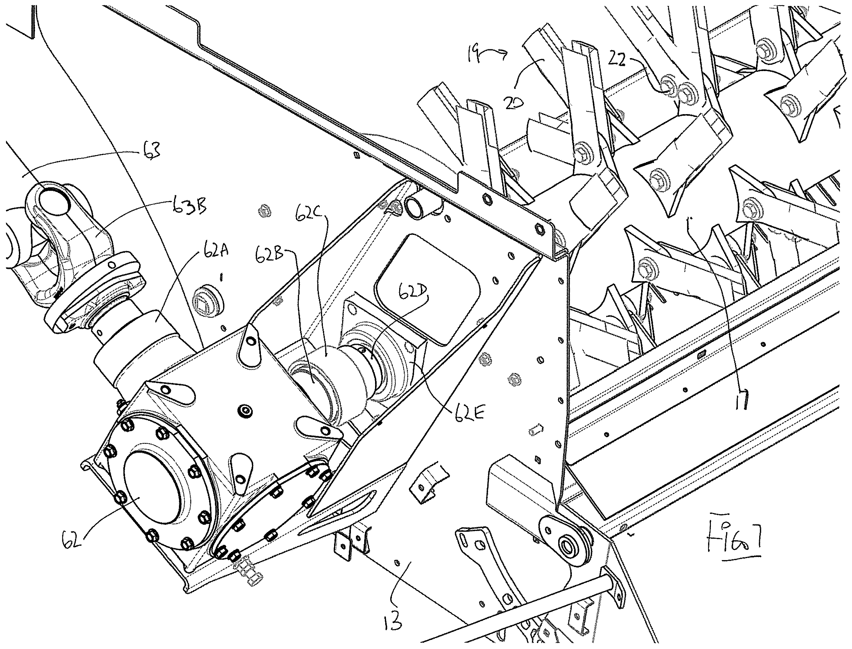

In this arrangement the shaft 62D of the rotor is carried in bearings at each end with the bearing adjacent the gear box 62 being shown in Figure 7 at 62E.

The rotor 17 is therefore attached to walls 13 of the housing 10 and supported with a bearing 62E at each end of the rotor as typically done. In another arrangement the rotor is supported by the gearbox shaft on one end/bearing at the other. This arrangement is less preferable because as the gearbox torques up everything moves slightly putting large stresses in the rotating gearbox shaft potentially leading to failure. The gearbox 62 is therefore preferably supported separately from the rotor 17 in a manner which acts to align the gearbox to the rotor shaft. The rotor is powered through the resilient coupler 62C which is formed by metal hubs with interconnected teeth. In addition there is then a flexible urethane spider that is wrapped around the teeth and a steel sleeve slid over the metal teeth and urethane spider to hold it all together. This allows the gearbox 62 to flex relative to the rotor shaft 17 and allows imperfect alignment.

The drive transmission further includes a drive shaft 63 extending from the first gear box 61 to the second gear box 62. Each end of the drive shaft 63 is connected to the respective shaft of the gear box 61, 62 by a universal joint 63A, 63B which allows flexing of the system in a situation where the shaft 62D of the rotor is misaligned with or no longer parallel to the shaft 206 due to movement of the housing 10 in the combine housing.

The chopper housing is movable between an operating position and no-operating position by a rack and pinion system. The driveline is capable of telescoping between the two positions so that the driveline does not need to be removed.

Each of the first and second gear boxes 61, 62 is right angle gear box with spiral bevel gears arranged so that the drive shaft 63 is connected to one gear and extends at right angles to the axis of the rotor and at right angles to the shaft 206.

The gear box 61 is pivotally mounted on a support wall 65 of the combine harvester so that the belt 53 may be tensioned. The drive shaft 63 extends along the outside of the support wall 65 where the support wall can be an exterior housing wall of the combine harvester. The gear box 62 is supported by a mount 62M on the side of the chopper housing. The mount 62M is adjustable so that the shaft 62D of the gearbox can be aligned with the chopper rotor shaft.

As shown in Figure 3 there is provided an adjustment in the form of a continuously variable transmission (CVT) 50 at the drive shaft 206 controlled from the cab to remotely adjust the rotational speed of the straw chopper rotor.

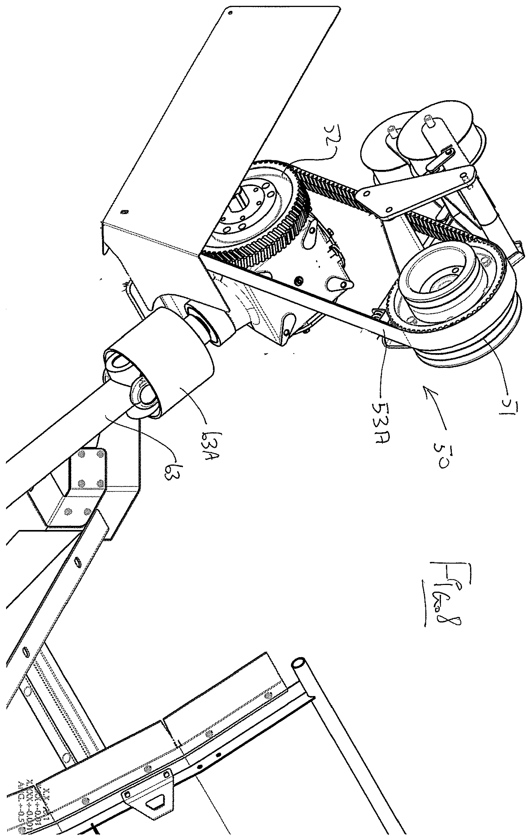

As shown in Figure 8, the drive also can include a high horse power drive belt 53A it is a cogged timing belt capable of carrying 270 HP whereas standard V-belts can only carry 120 HP. This can be located in the same width and space. The belt provides positive engagement between the combine drive and a second drive sheave on the first gearbox so that speed changes can be made quickly and heavy torque load changes can be controlled and the chopper speed maintained. This is necessary as residue management is becoming more demanding as the engine horsepower / threshing capacity of combine continues to increase. Belt 53 is a standard Vbelt. The cogged timing belt is positively engaged in to the pulleys and provides the best possible HP capacity per width of belt and is particularly applicable with machines with special constraints. Another advantage is that, in a variable speed drive, speed changes can be made quickly whereas a standard belt will slip.

As an alternative one of the gear boxes 61, 62 can include a speed control by which the speed is adjusted by an actuator from the cab on one of the first and second gearboxes. Also the shaft 206 or the gear boxes can include a disengagement coupling such as a clutch by which the transmission to the chopper rotor can be disengaged.

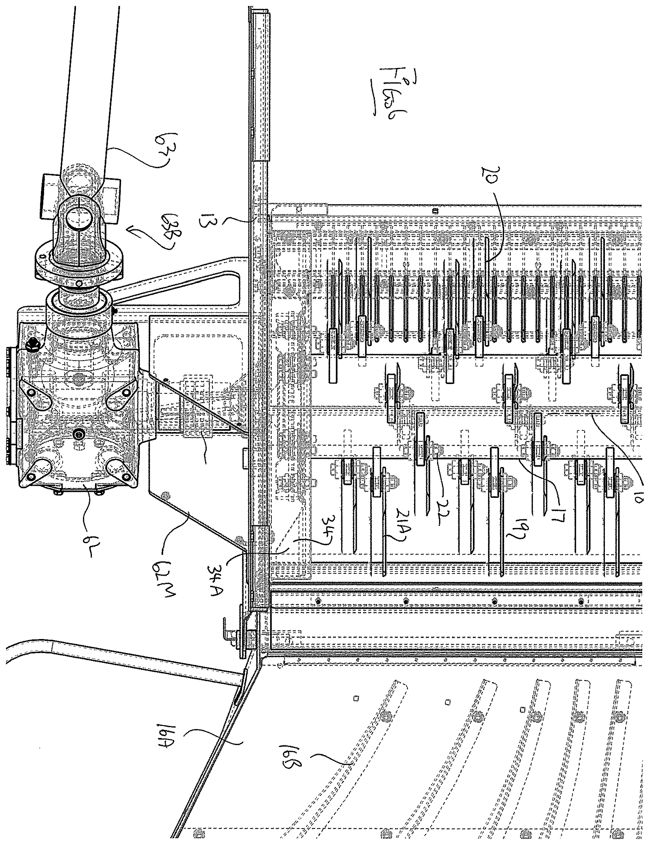

In another arrangement (not shown) gear box 61 can be carried on the support wall mounted by suitable mounting bolts and provides a splined coupling which connects to an end of the drive shaft 206 of the combine so that the shaft is supported by the gearbox shaft. Similarly as best shown in Figure 6, the gear box 62 is mounted on the end wall 13 of the housing and provides a splined shaft which extends through the end wall 13 into a splined female receptacle in the hub 17 so that the end of the hub 17 is supported by the shaft 62B of the second gearbox. This arrangement avoids the requirement for bearings on the end wall at the gear box although the other end of the rotor is supported on a bearing at the other side of the housing.

In one arrangement, the first and second gear boxes, the drive shaft and the chopper and spreading assembly are provided as a kit of parts as a component for use with existing combines for mounting on the selected output shaft of the combine harvester. In this way the system can be used with combines which have a conventional output shaft for driving of the chopper by a belt.

As an alternative the combine can be redesigned to include the first gear box as part of the drive system of the combine harvester so that the drive shaft and the second gear box are supplied as part of the chopper system.

## Claims

1. A combine harvester (102) comprising:
a crop inlet system (104, 106);
a threshing system (108, 110) for separating the crop into grain and discharge material;
a rear discharge (101) for expelling the discharge material from the combine harvester;
a combine drive system including a drive motor and an output drive shaft (200, 206);
and a chopper and spreading assembly (124) for the combine harvester;
the chopper and spreading assembly (124) comprising:
a housing (11);
a rotor (17) mounted in the housing for rotation around a generally horizontal axis and carrying a plurality of chopper blades (19) for chopping the discharge material;
and
a drive transmission (60) for connection to said output drive shaft (200, 206) of the drive system of the combine harvester for communicating drive from said output drive shaft (200, 206) to the rotor (17),
wherein there is provided an adjustment to remotely adjust the rotational speed of the rotor (17);
**characterized in that** the chopper and spreading assembly (124) is mounted at the rear discharge (101) and includes a material spreading assembly comprising a tailboard (16A) with guide fins (16B) receiving the chopped material from the rotor (17) with the fins (16B) spreading the material to the rear and sides of the combine harvester and that there is provided a continuously variable transmission (50) for remotely adjusting the speed of the rotor (17).

## Patentansprüche

1. Mähdrescher (102), umfassend:
ein Erntegut-Einlasssystem (104, 106);
ein Dreschsystem (108, 110) zum Trennen des Ernteguts in Korn- und Ausstoßmaterial;
eine Heckauswurföffnung (101) zum Ausstoßen des Ausstoßmaterials aus dem Mähdrescher;
ein Mähdrescher-Antriebssystem einschließend einen Antriebsmotor und eine Abtriebswelle (200, 206);
und eine Häcksler- und Verteileranordnung (124) für den Mähdrescher;
wobei die Häcksler - und Verteileranordnung (124) umfassen:
ein Gehäuse (11);
einen im Gehäuse zur Drehung um eine im Wesentlichen horizontale Achse angeordneten Rotor (17), welcher eine Vielzahl von Häckselklingen (19) zum Häckseln des Ausstoßmaterials trägt;
und
ein Antriebsgetriebe (60) zur Verbindung mit der Abtriebswelle (200, 206) des Antriebssystems des Mähdreschers zum Weiterleiten des Antriebs von der Abtriebswelle (200, 206) zum Rotor (17),
wobei eine Ferneinstellung zur Anpassung der Drehzahl des Rotors (17) vorgesehen ist,
**dadurch gekennzeichnet, dass** die Häcksler- und Verteileranordnung (124) an der Heckauswurföffnung (101) angeordnet ist und eine Anordnung zum Verteilen des Materials umfasst, welche eine Rückwand (16A) mit Führungsrippen (16B) umfasst, welche das zerhackte Material vom Rotor (17) mittels der Rippen (16B) aufnimmt und das Material nach hinten und seitlich des Mähdreschers verteilt, und weiterhin dadurch, dass ein stufenlos verstellbares Getriebe (50) zur Ferneinstellung der Drehzahl des Rotors (17) vorgesehen ist.

## Revendications

1. Moissonneuse-batteuse (102), comprenant :
un système d'admission de la récolte (104, 106) ;
un système de battage (108, 110) destiné à séparer le grain et la partie herbacée de la récolte ;
une décharge arrière (101) pour l'éjection de la parte herbacée hors de la moissonneuse-batteuse ;
un système d'entraînement combiné comprenant un moteur d'entraînement et un arbre d'entraînement de sortie (200, 206) ;
et un ensemble hache-paille et d'épandage (124) pour la moissonneuse-batteuse ;
ledit ensemble hache-paille et d'épandage (124) comprenant :
un carter (11) ;
un rotor (17) monté dans le carter, rotatif autour d'un axe sensiblement horizontal et supportant une pluralité de lames de hacheur (19) pour hacher la partie herbacée ;
et
une transmission d'entraînement (60), reliée à l'arbre d'entraînement de sortie (200, 206) du système d'entraînement de la moissonneuse-batteuse pour transmettre l'entraînement de l'arbre d'entraînement de sortie (200, 206) au rotor (17),
un réglage étant prévu pour régler à distance la vitesse de rotation du rotor (17) ;
**caractérisée en ce que** l'ensemble hache-paille et d'épandage (124) est monté sur la décharge arrière (101) et est pourvu d'un dispositif d'épandage de matière présentant un hayon (16A) avec des ailettes de guidage (16B) recevant la matière hachée du rotor (17), les ailettes (16B) épandant la matière vers l'arrière et les côtés de la moissonneuse-batteuse, et **en ce qu'**une transmission à variation continue (50) est prévue pour le réglage à distance de la vitesse du rotor (17).
